# EUROPEAN PATENT SPECIFICATION

(11) **EP 4 259 944 B1**
(45) Date of publication and mention of the grant of the patent: **03.12.2025**
(21) Application number: 21908020.7
(22) Date of filing: 14.12.2021
(51) Int. Cl.: F16B 35/04, F16B 39/284, F16B 5/02

(54) **FASTENING COLLARS, MULTI-PIECE FASTENERS, AND METHODS FOR FASTENING**
BEFESTIGUNGSKRAGEN, MEHRTEILIGE BEFESTIGUNGSELEMENTE UND BEFESTIGUNGSVERFAHREN
COLLIERS DE FIXATION, ÉLÉMENTS DE FIXATION EN PLUSIEURS PARTIES, ET PROCÉDÉS DE FIXATION

(30) Priority: 14.12.2020 US 202063124918 P
(43) Date of publication of application: 18.10.2023
(73) Proprietor: Howmet Aerospace Inc., Pittsburgh, PA 15212-5858 (US)
(72) Inventor: ARCINIEGA, Oviedo, Perris, CA 92671 (US)
(74) Representative: Forresters IP LLP
(86) International application number: PCT/US2021/072909
(87) International publication number: WO 2022/133436

(56) References cited:
- EP-B1- 2 078 165
- JP-A- H09 329 119
- US-A- 4 136 596
- US-A- 4 921 384
- US-A- 5 125 778
- US-A- 5 125 778
- US-A1- 2004 028 500

## Description

### FIELD OF USE

The present disclosure relates to fastening collars, multi-piece fasteners, and methods for fastening.

### BACKGROUND

Vehicle frames, storage racks, solar panel sub-structures, aircraft parts, and other structures can include numerous mechanical fasteners. For example, a mechanical fastener can be installed in a bore of a structural component to secure parts together. Properly installing a mechanical fastener into a bore presents challenges.

### SUMMARY

The invention is set out in the appended set of claims.

According to one non-limiting aspect of the present disclosure, a fastening collar is provided. The fastening collar comprises a first collar end, a second collar end, and an elongate portion intermediate the first collar end and the second collar end. The elongate portion defines a longitudinal axis of the fastening collar. The elongate portion comprises a first region, a second region, and an inner collar surface. The first region is adjacent to the first collar end and extends a first distance along the longitudinal axis. In certain non-limiting embodiments, the first distance is at least 5% of the total length of the fastening collar, as measured along the longitudinal axis. According to the invention, the first region comprises a portion defining a concave radius. In certain non-limiting embodiments, the first region comprises a portion of the elongate portion defining a concave radius of the elongate portion and the concave radius is at least 1.52 mm (0.060 inches). The second region is adjacent to the second collar end, extends a second distance along the longitudinal axis, and comprises a flange. In various non-limiting embodiments, the second distance is at least 2% of the total length of the fastening collar, as measured along the longitudinal axis. The inner collar surface defines a collar cavity extending through the elongate portion from the first collar end to the second collar end. The second collar end extends away from the longitudinal axis of the elongate portion at a first angle offset from an angle perpendicular to the longitudinal axis of the elongate portion. In various non-limiting embodiments, the first angle is at least 1 degree offset from the angle perpendicular to the longitudinal axis of the elongate portion, at least 5 degrees offset from perpendicular to the longitudinal axis of the elongate portion, and/or in a range of 1 degree to 30 degrees offset from the angle perpendicular to the longitudinal axis of the elongate portion. In various non-limiting embodiments, the fastening collar comprises at least one of a metal, a metal alloy, and a composite.

According to another non-limiting aspect of the present disclosure, a fastening collar is provided. The fastening collar comprises a first collar end, a second collar end, and an elongate portion intermediate the first collar end and the second collar end. The elongate portion defines a longitudinal axis of the fastening collar. The elongate portion comprises a first region, a second region, and an inner collar surface. The first region is adjacent to the first collar end, extends a first distance along the longitudinal axis, and comprises a portion defining a concave radius. In certain non-limiting embodiments, the first distance is at least 5% of the total length of the fastening collar, as measured along the longitudinal axis. In certain non-limiting embodiments, the first region comprises a portion defining a concave radius and the concave radius is at least 1.52 mm (0.060 inches). The second region is adjacent to the second collar end and extends a second distance along the longitudinal axis. In various non-limiting embodiments, the second distance is at least 2% of the total length of the fastening collar, as measured along the longitudinal axis. The inner collar surface defines a collar cavity extending through the elongate portion from the first collar end to the second collar end. In certain non-limiting embodiments, the second collar end comprises a flange and extends away from the longitudinal axis of the elongate portion at a first angle offset from an angle perpendicular to the longitudinal axis of the elongate portion. In various non-limiting embodiments, the first angle is at least 1 degree offset from the angle perpendicular to the longitudinal axis of the elongate portion, at least 5 degrees offset from the angle perpendicular to the longitudinal axis of the elongate portion, and/or in a range of 1 degree to 30 degrees offset from the angle perpendicular to the longitudinal axis of the elongate portion. In various non-limiting embodiments, the fastening collar comprises at least one of a metal, a metal alloy, and a composite.

According to yet another non-limiting aspect of the present disclosure, a multi-piece fastener is provided. The multi-piece fastener comprises a fastening collar according to the present disclosure and a pin configured to be at least partially received within a collar cavity of the fastening collar. In certain non-limiting embodiments, the pin comprises a shank comprising at least one of an annular shoulder, a groove, a threaded region, and a substantially smooth region. In various non-limiting embodiments, the shank comprises a shank diameter in a range of 1.52 mm to 102 mm (0.06 inch to 4 inches). In various non-limiting embodiments, the multi-piece fastener is configured to be installed in a bore in a structure configured as at least one of an aerospace part or component, an automotive part or component, a transportation part or component, and a building and construction part or component.

According to a further non-limiting aspect of the present disclosure, a method for fastening is provided. The method comprises inserting a first pin end of a pin of a multi-piece fastener according to the present disclosure into a bore of a structure. The method further comprises forcibly contacting the elongate portion of the fastening collar with a contact surface of an installation tool, thereby forcibly contacting the structure with the second collar end of the fastening collar and deforming the elongate portion onto the shank of the pin. A force required during forcibly contacting the elongate portion to deform the elongate portion onto the shank of the pin is reduced compared to a force required to forcibly contact and deform onto the pin a comparative elongate portion that does not comprise a second collar end extending away from a longitudinal axis of the elongate portion at the first angle offset from the angle perpendicular to the longitudinal axis.

It will be understood that the inventions disclosed and described in this specification are not limited to the aspects summarized in this Summary. The reader will appreciate the foregoing details, as well as others, upon considering the following detailed description of various non-limiting and non-exhaustive aspects according to this specification.

### BRIEF DESCRIPTION OF THE DRAWINGS

The features and advantages of the examples, and the manner of attaining them, will become more apparent, and the examples will be better understood, by reference to the following description taken in conjunction with the accompanying drawings, wherein:
FIG. 1 is a side view of a conventional fastening collar and an installation tool;
FIG. 2A is side view of a non-limiting embodiment of a fastening collar according to the present disclosure comprising a first region comprising a concave radius;
FIG. 2B is a cross-sectional side view of the fastening collar of FIG. 2A;
FIG. 2C is a cross-sectional side view of a fastening collar according to the present disclosure, not covered by the claims, comprising a first region comprising a taper;
FIG. 3 is a partial cross-sectional side view of a non-limiting embodiment of a multi-piece fastener according to the present disclosure;
FIG. 4A is a partial cross-sectional side view of a non-limiting embodiment of a multi-piece fastener disposed in a structure and an installation tool in a first configuration;
FIG. 4B is a cross-sectional side view of the multi-piece fastener in a structure and an installation tool of FIG. 4A in a second configuration; and
FIG. 5 is a flow chart of a non-limiting embodiment of a method for fastening according to the present disclosure.

Corresponding reference characters indicate corresponding parts throughout the several views. The exemplifications set out herein illustrate certain non-limiting embodiments, in one form, and such exemplifications are not to be construed as limiting the scope of the appended claims in any manner.

### DETAILED DESCRIPTION OF NON-LIMITING EMBODIMENTS

Various examples are described and illustrated herein to provide an overall understanding of the structure, function, and use of the disclosed fastening collars, multi-piece fasteners, pins, and methods of fastening. The various examples described and illustrated herein are non-limiting and non-exhaustive. Thus, the invention is not limited by the description of the various non-limiting and non-exhaustive examples disclosed herein. Rather, the invention is defined solely by the claims. The features and characteristics illustrated and/or described in connection with various examples may be combined with the features and characteristics of other examples. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. The various embodiments disclosed and described in this specification can comprise, consist of, or consist essentially of the features and characteristics as variously described herein.

As used herein, □intermediate□ means that the referenced element is disposed between two elements but is not necessarily in contact with those elements. Accordingly, unless stated otherwise herein, an element that is □intermediate□ a first element and a second element may or may not be adjacent to or in contact with the first and/or second elements, and other elements may be disposed between the intermediate element and the first and/or second elements.

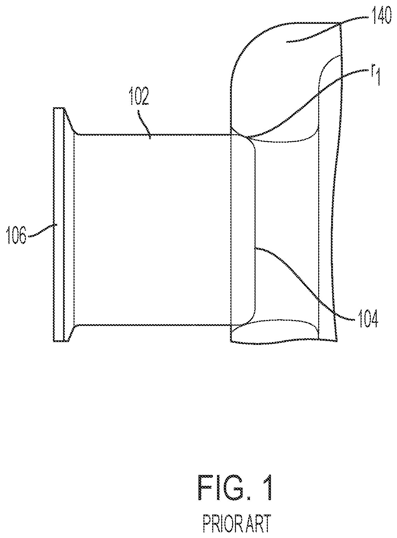

Referring to FIG. 1, a conventional fastening collar 102 has a first collar end 104 and a second collar end 106. The first collar end 104 can be configured to engage an installation tool 140. The conventional fastening collar 102 has a constant wall thickness and a region defining a convex radius, r₁, of curvature on the first collar end 104.

A drawback of the conventional fastening collar 102 can be the limited contact surface area between the installation tool 140 and the conventional fastening collar 102 during the installation process due to the convex radius, r₁, which can create a significantly high bearing stress during the installation process. Therefore, for example, a coating on the first collar end 104 of the conventional fastening collar 102 can be damaged during installation, resulting in uncoated regions which can affect the life of the part. Fastening collars, multi-piece fasteners, and methods for fastening are provided herein that can reduce bearing stress during the installation process and/or reduce damage to a coating on the fastening collars.

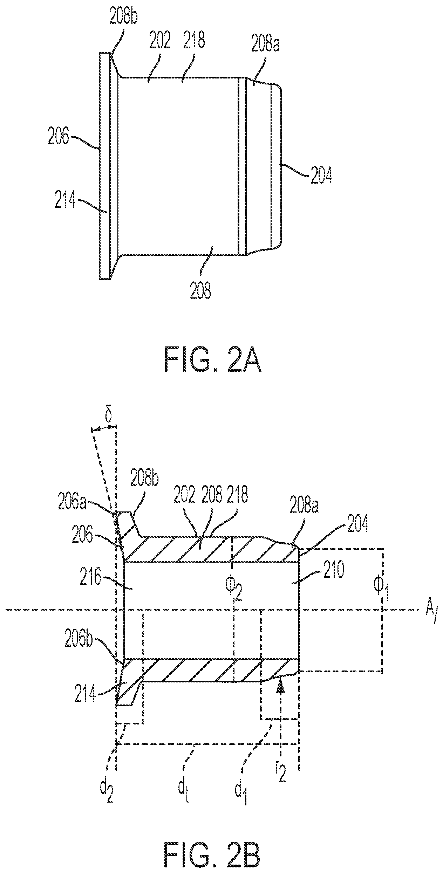

For example, referring to FIGs. 2A-2B, a non-limiting embodiment of a fastening collar 202 according to the present disclosure can comprise a first collar end 204, a second collar end 206, an elongate portion 208 intermediate the first collar end 204 and the second collar end 206, an inner collar surface 216, and an external collar surface 218. The elongate portion 208 can define a longitudinal axis, A*ₗ*, of the fastening collar 202. The inner collar surface 216 extends from the first collar end 204 to the second collar end 206. The inner collar surface 216 can define a cavity 210 that extends through the elongate portion 208 from the first collar end 204 to the second collar end 206.

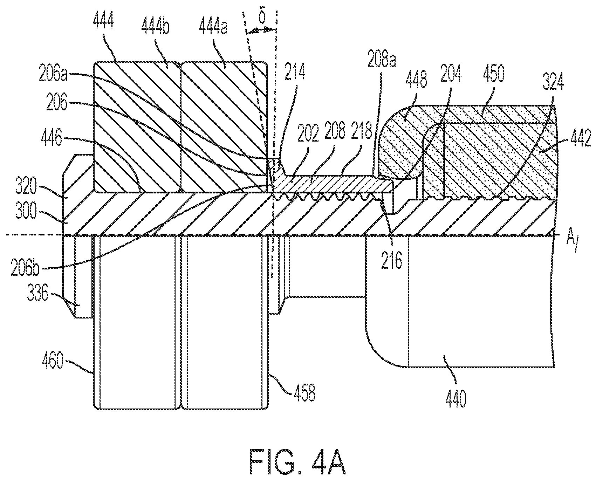

The elongate portion 208 can comprise a first region 208a adjacent to the first collar end 204 and a second region 208b adjacent to the second collar end 206. The first region 208a extends a first distance, d₁, along the elongate portion 208, and comprises a region defining a concave radius. The first region 208a can be configured to conform to a contact surface on a multi-piece fastener installation tool (e.g., multi-piece fastener installation tool 440 as described with respect to FIGs. 4A-4B) such that a contact surface area between the multi-piece fastener installation tool and the fastening collar 202 can be increased during installation to reduce bearing stress. The first distance, d₁, can be at least 5% of the total length, dₜ, of the fastening collar 202 a measured along the longitudinal axis, A*ₗ*, such as, for example, at least 10%, or at least 20% of the total length, dₜ, of the fastening collar 202. In various non-limiting embodiments, the first distance, d₁, can be in a range of 0.508 mm to 8.89 mm (0.020 inches to 0.350 inches). As used herein, □concave□ and □convex□ of a region of the elongate portion 208 are determined relative to the external collar surface 218.

Reducing bearing stress can improve the operational life of the fastening collar 202 and/or a multi-piece fastener installation tool. For example, the fastening collar 202 can be more resistant to the formation of one or more of bare spots, flaking, blisters, coating separations, runs, sags, corrosion, and electromagnetic effects than the conventional fastening collar 102 illustrated in FIG. 1. Referring to FIG. 2A and 2B, the first region 208a and/or the second region 208b can reduce the force required to initiate the installation of a multi-piece fastener (e.g., multi-piece fastener 300) comprising the fastening collar 202.

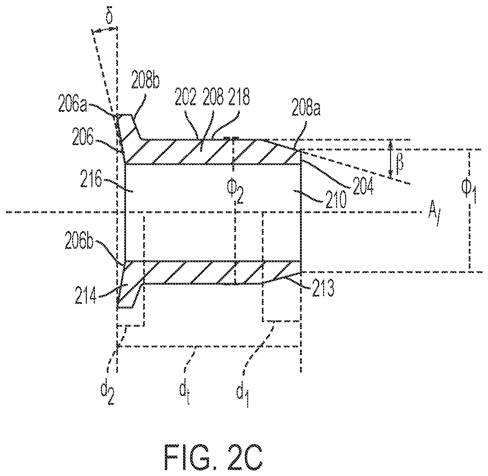

In various non-limiting embodiments, referring to FIG. 2B, the first region 208a can comprise a radius, r₂, of curvature that can be at least 1.52 mm (0.060 inches), such as, for example, at least 2.54 mm (0.1 inches), or at least 5.08 mm (0.2 inches). In certain non-limiting embodiments, the radius, r₂, of curvature can be in a range of 1.52 mm to 15.2 mm (0.060 inches to 0.600 inches). The radius, r₂, can be concave relative to the external collar surface 218. In various non-limiting embodiments, referring to FIG. 2C, the first region 208a comprises a taper 213 such that an exterior surface of the first region 208a comprises a frusto-conical shape. In various non-limiting embodiments, the taper 213 can comprise an angle, β, of at least 3 degrees relative to the longitudinal axis, A*ₗ*, such as, for example, at least 5 degrees, or at least 10 degrees, all relative to the longitudinal axis, A*ₗ*. In certain non-limiting embodiments, the angle, β, is in a range of 3 degrees to 70 degrees relative to the longitudinal axis, A*ₗ*, such as, for example, 3 degrees to 60 degrees, 3 degrees to 45 degrees, or 3 degrees to 25 degrees, all relative to the longitudinal axis, A*ₗ*.

Referring to FIGs. 2B and 2C, the first region 208a can comprise a reduced outer diameter, ϕ₁, (measured at an end thereof), relative to a diameter, ϕ₂, of the elongate portion 208 between the first region 208a and the second region 208b. For example, the outer diameter, ϕ₁, of the first region 208a can be at least 2% less than the diameter, ϕ₂, such as, for example, at least 5% less, or at least 10% less than the diameter, ϕ₂.

The second region 208b extends a second distance, d₂, along the elongate portion 208, and can comprise a radially projecting flange 214. The second region 208b can be configured to conform to a surface of a structure (e.g., first side 458 of structure 444 as described with respect to FIGs. 4A-4B) such that a contact surface area between the structure and the fastening collar 202 can be increased during installation of a multi-piece fastener including the fastening collar 202 to reduce bearing stress during installation. The second distance, d₂, can be at least 2% of the total length, dt, of the fastening collar 202, as measured along the longitudinal axis, A*ₗ*, such as, for example, at least 5%, or at least 10% of the total length, dt, of the fastening collar 202.

In various non-limiting embodiments, the second collar end 206 includes a region that extends away from the longitudinal axis, A*ₗ*, of the elongate portion 208 at a first angle, δ, that is offset from an angle perpendicular to the longitudinal axis, A*ₗ*, of the elongate portion 208. For example, and without limitation, the first angle, δ, can be offset at least 1 degree from the angle perpendicular to the longitudinal axis, A*ₗ*, such as, for example, at least 2 degrees, at least 5 degrees, at least 10 degrees, or at least 15 degrees offset from the angle perpendicular longitudinal axis, A*ₗ*. For example, and without limitation the first angle, δ, can be in a range of 1 degree to 30 degrees offset from the angle perpendicular longitudinal axis, A*ₗ*, such as, for example, 10 degrees to 20 degrees, or 14 degrees to 16 degrees offset from the angle perpendicular longitudinal axis, A*ₗ*. Providing the first angle, δ, can reduce the likelihood or degree of splaying of the second collar end 206 during installation. For example, an outer surface 206a of the second collar end 206 can be the surface of the fastening collar 202 that initially contacts a structure during installation of the fastening collar 202. When the installation force continues to be applied to the fastening collar 202, the first angle, δ, can be reduced and the contact surface area between the fastening collar 202 and the structure can be increased.

In various non-limiting embodiments, the first angle, δ, at which a region of the second collar end 206 extends away from the longitudinal axis of the elongate portion 208 can reduce the force spike during installation due to splaying, which can modulate the preload force so that the retained preload (e.g., steady state) can be at a desirable level. The resilience of the flange 214 as a result of providing the first angle, δ, at which the second collar end 206 extends away from the longitudinal axis, A*ₗ*, of the elongate portion 208 can reduce shock during installation and thereby help prevent damage to the structure in which the fastener is installed.

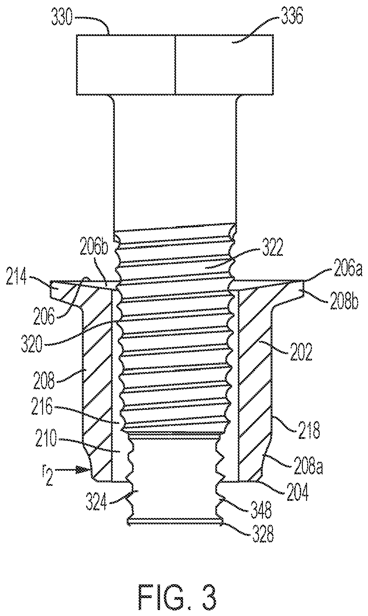

The cavity 210 of the elongate portion 208 can be configured to at least partially receive a pin of a multi-piece fastener, such as pin 320 of the multi-piece fastener 300 shown in FIG. 3. In other non-limiting embodiments (not shown), a multi-piece fastener according to the present disclosure can comprise three or more components. In various non-limiting embodiments, referring to FIG. 3, the multi-piece fastener 300 can consist of a two-piece assembly including, for example, the fastening collar 202 and the pin 320. In certain non-limiting embodiments, the multi-piece fastener 300 can comprise a lockbolt. In certain non-limiting embodiments of the multi-piece fastener 300 including a lockbolt, the lockbolt can be a structural lockbolt fastener, such as, for example, a structural rivet, a structural bolt, or a structural stud.

The pin 320 can comprise a first pin end 328, a second pin end 330, and a shank 322. The shank 322 can comprise a shape suitable to be received within the cavity 210 of the fastening collar 202. In various non-limiting embodiments, the shank 322 has a generally cylindrical shape. The shank 322 can be intermediate the first pin end 328 and the second pin end 330 and can be dimensioned so that the shank 322 can be inserted and extend at least partially into the cavity 210. When the shank 322 is inserted in the cavity 210, the first pin end 328 can be disposed adjacent to the first collar end 204, and a head portion 336 of the second pin end 330 can be disposed adjacent to the second collar end 206.

The cavity 210 of the fastening collar 202 can be configured to at least partially receive the shank 322 of the pin 320 therein. For example, the cavity 210 can comprise a shape suitable to receive the shank 322 of the pin 320. The fastening collar 202, including the inner collar surface 216, can be configured to be at least partially deformed onto the shank 322. For example, during and/or after introduction of the shank 322 into the cavity 210, the elongate portion 208, including at least a portion of the inner collar surface 216, can be at least partially deformed (e.g., swaged) onto the shank 322 responsive to forcible contact between the fastening collar 202 and a multi-piece fastener installation tool. Deformation of the elongate portion 208 can secure the fastening collar 202 to the shank 322 of the pin 320, securing the multi-piece fastener 300 within a bore in a structure.

In various non-limiting embodiments, the pin 320 may comprise a breakneck groove (not shown) configured to fracture to separate all or a portion of a pull region 324 from the pin 320 upon installation of the multi-piece fastener 300 in a bore in a structure. In certain other non-limiting embodiments, the pin 320 does not comprise a breakneck groove but is configured to include one or more other features so that the pull region 324 of the pin 320 fractures during installation of the multi-piece fastener 300. In various non-limiting embodiments of the multi-piece fastener 300, the pin 320 does not comprise a breakneck groove or other feature configured to fracture upon installation of the multi-piece fastener 300, and the pull region 324 remains intact after installation. Thus, various non-limiting embodiments of multi-piece fasteners according to the present disclosure may be installed in a structure without fracturing of a breakneck groove or other feature or, alternatively, the fasteners may include a breakneck groove or other feature that fractures upon installation of the multi-piece fastener into the structure.

In various non-limiting embodiments, the second pin end 330 can further comprise the head portion 336 configured to inhibit the pin 320 from traversing into a bore in a structure beyond a predetermined distance. The shank 322 can comprise at least one of a generally smooth region, an annular shoulder, a groove, a thread, and/or can comprise one or more other features configured to engage the inner collar surface 216 of the fastening collar 202.

In various non-limiting embodiments, the shank 322 can comprise the pull region 324 configured to be engaged by a multi-piece fastener installation tool (not shown) when installing the multi-piece fastener 300 in a bore in a structure. The pull region 324 can comprise an axial length, and in various non-limiting embodiments the pull region 324 can comprise a taper. In various non-limiting embodiments, the pull region 324 can comprise at least one of a generally smooth region, an annular shoulder, a groove, a thread, and/or can comprise one or more other features configured to be engaged by a multi-piece fastener installation tool. For example, and without limitation, the pull region 324 can comprise grooves 348, as illustrated in FIG. 3, that can be engaged by a multi-piece fastener installation tool. In certain non-limiting embodiments, the multi-piece fastener installation tool can be a puller tool or a squeezer tool.

The fastening collar 202 and/or the pin 320 can be sized as appropriate for the intended application. For example, the shank 322 can comprise a shank diameter in a range of 1.52 mm to 102 mm (0.06 inch to 4 inches), and the fastening collar 202 can be size to receive the shank 322.

The fastening collar 202 can comprise any suitable material, such as, for example, a metal, a metal alloy, a polymer, or another suitable material. For example, in various non-limiting embodiments, the multi-piece fastener 100 can comprise at least one of aluminum, an aluminum alloy, titanium, a titanium alloy, nickel, a nickel alloy, iron, an iron alloy, and a carbon fiber composite material.

As illustrated in the non-limiting embodiments shown in FIGs. 4A-4B, the multi-piece fastener 300 can be installed into a bore 446 in a structure 444. As illustrated, the bore 446 can extend through the structure 444 from a first side 458 to a second side 460 of the structure 444. The structure 444 can comprise, for example, at least one of a metal, a metal alloy, a composite material, or another suitable material. For example, in certain non-limiting embodiments, the structure 444 can comprise one or more of aluminum, an aluminum alloy, titanium, a titanium alloy, nickel, a nickel alloy, iron, an iron alloy, and a carbon fiber composite material. In various non-limiting embodiments, the structure 444 in which the multi-piece fastener 300 is installed comprises aluminum and/or an aluminum alloy, such as, for example, a 7075 aluminum alloy. In various non-limiting embodiments, the structure 444 into which a multi-piece fastener 300 can be installed can be configured as at least one of an aerospace component or structure, an automotive component or structure, a transportation component or structure, a building and construction component or structure, or another component or structure.

The structure 444 can comprise a single layer of material or two or more layers of material. For example, as illustrated in FIGs. 4A-4B, the structure 444 can comprise a first layer 444a and a second layer 444b, which may be the same material or different materials. The first layer 444a can be positioned intermediate the second layer 444b and the fastening collar 202 when the multi-piece fastener 300 is installed. In various non-limiting embodiments, the first layer 444a is adjacent to or contacts the fastening collar 202.

Additionally, in various non-limiting embodiments, the first pin end 328 can be sized and configured to facilitate alignment of the pin 320 with the bore 446, thereby allowing the first pin end 328 to readily move into and through the bore 446. In various non-limiting embodiments, the head portion 336 can be sized and configured to inhibit the pin 320 from traversing into the bore 446 beyond a predetermined distance.

As illustrated in FIG. 4A, the first pin end 328 of the pin 320 was positioned in alignment with the second side 460 of the bore 446 and inserted through the bore 446. The fastening collar 202 was positioned over the first pin end 328, and the first pin end 328 has been inserted into the cavity 310 of the fastening collar 302. In the arrangement shown in FIG. 4A the fastening collar 202 has not yet been deformed about the pin 320.

With reference to FIG. 4A, and as will be understood by those having ordinary skill in the multi-piece fastener art considering the present disclosure, jaws of the collet 442 of a multi-piece fastener installation tool 440 can close around and forcibly engage the pull region 324 of pin 320. Upon engagement, the jaws of the collet 442 can apply an axial force to the pull region 324 of the pin 320. The jaws of the collet 442 can retract into a housing 450 of the multi-piece fastener installation tool 440, and the pin 320 can also move as the jaws of the collet 442 retract due to the engagement between the pull region 324 and the jaws of the collet 442. As the pin 320 moves in this way, an anvil 448 of the multi-piece fastener installation tool 440 can forcibly contact the fastening collar 202 with an axial force and urge the fastening collar 202 along the pin 320 in a direction away from the first pin end 328. The movement of the fastening collar 202 can decrease the width of a gap, if present, between the first layer 444a and the second layer 444b of the structure 444 and forcibly contact the fastening collar 202 with the structure 444.

As illustrated in FIG. 4A, the anvil 448 has engaged the first region 208a of the elongate portion 208 and the outer surface 206a of the second collar end 206 of the fastening collar 202 has engaged the first side 458 of the structure 444, while an inner surface 206b of the second collar end 206 has not engaged the structure 444. In various non-limiting embodiments, the first region 208a is shaped to conform to the anvil 448 of the multi-piece fastener installation tool 440 such that a contact surface area between the multi-piece fastener installation tool 440 and the fastening collar 202 can be increased during installation to reduce bearing stress on the fastening collar 202.

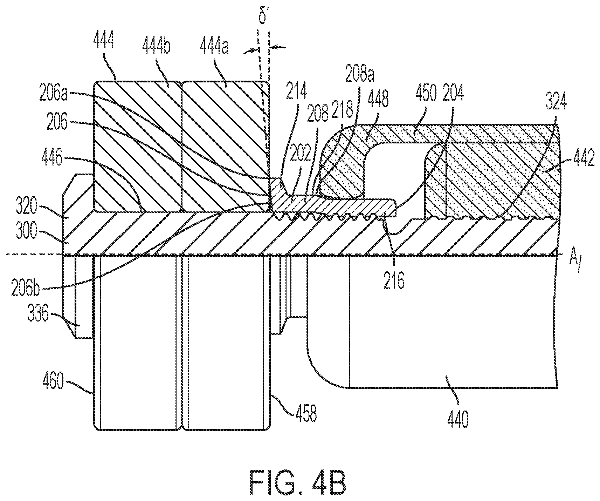

Referring to FIG. 4B, when the anvil 448 of the multi-piece fastener installation tool 440 imparts a sufficient force to the fastening collar 202, the elongate portion 208 is at least partially deformed (e.g., swaged) onto the pin 320. For example, the inner collar surface 216 can be deformed onto the shank 322 of the pin 320 intermediate the first layer 444a and the first pin end 328. During deformation, the first angle, δ, shown in FIG. 4A can be reduced to a first angle, δ', shown in FIG. 4B, such that a larger surface area region of the second collar end 206 is touching the first side 458 of the structure 444 in the configuration shown in FIG. 4B than shown in FIG. 4A. For example, the inner surface 206b of the second collar end 206 is shown engaging the first side 458 of the structure 444 in FIG. 4B. Because the area of contact between the second collar end 206 and the first side 458 of the structure 444 is initially minimal and gradually increases as the installation forced is applied, shock during installation can be reduced to help prevent damage to the structure 444 while maintaining a desirable preload force.

The deformation of the elongate portion 208 can secure the fastening collar 202 to the pin 320 and thereby secure the multi-piece fastener 300 to at least a portion of the structure 444. In that way, for example, the first layer 444a and second layer 444b of the structure 444 are secured together. After installation of the multi-piece fastener 300 into the structure 444, the fastening collar 202 and the head portion 336 of the pin 320 are applying a clamping force to the structure 444.

As illustrated in FIG. 4B, the pin 320 may not fracture after installation into the structure 444. Alternatively, the pin 320 may fracture (not shown) after installation into the structure 444 as a result of force applied to the pin 320 by the multi-piece fastener installation tool 440. For example, the pin 320 may fracture along a breakneck groove, if present, after installation into the structure 444.

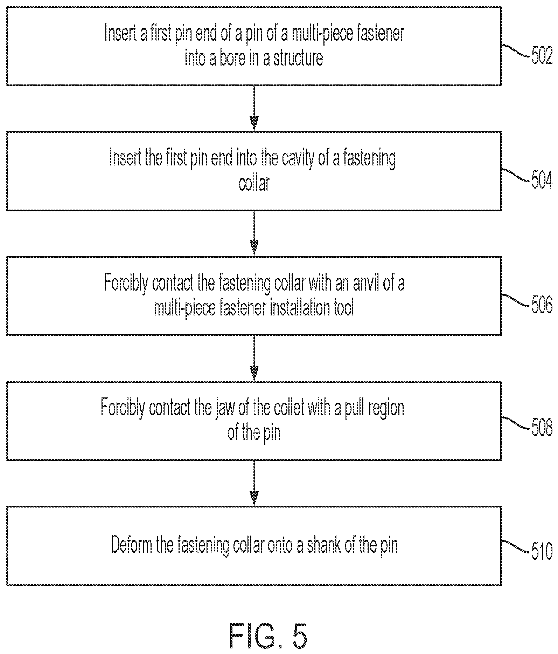

Embodiments of multi-piece fasteners according to the present disclosure can be used in a method for fastening a structure. FIG. 5 illustrates steps of a non-limiting embodiment of such a method. The method illustrated in FIG. 5 can comprise inserting the first pin end 328 of a multi-piece fastener 300 according to the present disclosure into a bore 446 in a structure 444 (at step 502). After inserting the first pin end 328 into the structure 444, the first pin end 328 can be inserted into the cavity 210 of the fastening collar 202 (at step 504). Subsequent to inserting the first pin end 328 into the cavity 210, in certain non-limiting embodiments, the fastening collar 202 can be forcibly contacted with an anvil 448 of a multi-piece fastener installation tool 440, urging the fastening collar 202 to move along the pin 320 in a direction away from the first pin end 328 (at step 506). In various non-limiting embodiments, the pull region 324 of the pin 320 can be forcibly contacted with jaws of the collet 442 of the multi-piece fastener installation tool 440 (at step 508). In various non-limiting embodiments, steps 506 and 508 can occur simultaneously. The inner collar surface 216 of the fastening collar 202 can be deformed onto the shank 322 of the pin 320, thereby securing the pin 320 to the fastening collar 202 and retaining at least a portion of the multi-piece fastener 300 in the structure 444 (at step 510). A force spike during installation due to splaying of the second collar end 206 can be modulated so that the retained preload (e.g., steady state) can be at a desirable level and shock during installation is reduced to help prevent damage to the structure 444 due to the configuration of the second collar end 206 of the fastening collar and/or the configuration of the first region 208a of the fastening collar 202.

One skilled in the art will recognize that the fastening collars, multi-piece fasteners, structures, methods, operations/actions, and objects described herein, and the accompanying discussion, are non-limiting examples presented for the sake of conceptual clarity and that various modifications to the disclosed configurations are contemplated. Consequently, as used herein, the specific examples/embodiments set forth, and the accompanying discussion, are intended to be representative of their more general classes. In general, use of any specific exemplar is intended to be representative of its class and the non-inclusion of specific components, devices, apparatus, operations/actions, and objects should not be taken as limiting. While the present disclosure provides descriptions of various specific aspects for the purpose of illustrating various aspects of the present disclosure and/or its potential applications, it is understood that variations and modifications will occur to those skilled in the art. Accordingly, the invention or inventions described herein should be understood to be at least as broad as they are claimed and not as more narrowly defined by particular illustrative aspects provided herein.

Any references herein to □various embodiments □, □some embodiments□, □one embodiment□, □an embodiment□, a □non-limiting embodiment□, or like phrases mean that a particular feature, structure, or characteristic described in connection with the example is included in at least one embodiment. Thus, appearances of the phrases □in various embodiments□ , □in some embodiments□ , □in one embodiment□ , □in an embodiment□ , □in a non-limiting embodiment□, or like phrases in the specification do not necessarily refer to the same embodiment. Furthermore, the particular described features, structures, or characteristics may be combined in any suitable manner in one or more embodiments. Thus, the particular features, structures, or characteristics illustrated or described in connection with one embodiment may be combined, in whole or in part, with the features, structures, or characteristics of one or more other embodiments without limitation. Such modifications and variations are intended to be included within the scope of the present embodiments.

In this specification, unless otherwise indicated, all numerical parameters are to be understood as being prefaced and modified in all instances by the term □about,□ in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described herein should at least be construed in light of the number of reported significant digits and by applying ordinary rounding techniques.

Also, any numerical range recited herein includes all sub-ranges subsumed within the recited range. For example, a range of □1 to 10□ includes all sub-ranges between (and including) the recited minimum value of 1 and the recited maximum value of 10, that is, having a minimum value equal to or greater than 1 and a maximum value equal to or less than 10. Any maximum numerical limitation recited in this specification is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited. All such ranges are inherently described in this specification.

The grammatical articles □a□ , □an□ , and □the□ , as used herein, are intended to include □at least one□ or □ one or more□ , unless otherwise indicated, even if □ at least one□ or □ one or more□ is expressly used in certain instances. Thus, the foregoing grammatical articles are used herein to refer to one or more than one (i.e., to □ at least one□ ) of the particular identified elements. Further, the use of a singular noun includes the plural, and the use of a plural noun includes the singular, unless the context of the usage requires otherwise.

## Claims

1. A fastening collar (202) comprising:
a first collar end (204);
a second collar end (206); and
an elongate portion (208) intermediate the first collar end and the second collar end and defining a longitudinal axis (A*ₗ*) of the fastening collar, wherein the elongate portion comprises:
a first region (208a) adjacent the first collar end, extending a first distance (d₁) along the longitudinal axis, wherein the first region comprises a region defining a concave radius (r₂), optionally wherein the first region further comprises a taper (213),
a second region (208b) adjacent to the second collar end, extending a second distance (d₂) along the longitudinal axis, and comprising a flange (214), and
an inner collar surface (216) defining collar cavity (210) extending through the elongate portion from the first collar end to the second collar end.

2. The fastening collar (202) of claim 1, wherein the second collar end (206) extends away from the longitudinal axis (A*ₗ*) of the elongate portion (208) at a first angle (δ) offset from an angle perpendicular to the longitudinal axis of the elongate portion.

3. The fastening collar (202) of claim 2, wherein the first angle (δ) is at least 1 degree offset from the angle perpendicular to the longitudinal axis (A*ₗ*) of the elongate portion (208), preferably wherein the first angle is:
at least 5 degrees offset from the angle perpendicular to the longitudinal axis of the elongate portion; or
in a range of 1 degree to 30 degrees offset from the angle perpendicular to the longitudinal axis of the elongate portion.

4. The fastening collar (202) of claim 2 or claim 3, wherein the concave radius (r₂) is at least 1.52 mm (0.060 inches), and/or the first region (208a) comprises the taper (213) and the taper comprises a second angle (β) in a range of 3 degrees to 70 degrees relative to the longitudinal axis (A*ₗ*).

5. The fastening collar (202) of claim 2, wherein the first distance (d₁) is at least 5% of the total length (dt) of the fastening collar and the second distance (d₂) is at least 2% of the total length of the fastening collar.

6. The fastening collar (202) of any one of claims 2-5, wherein the fastening collar comprises at least one of a metal, a metal alloy, and a composite.

7. The fastening collar (202) of claim 1, wherein the concave radius (r₂) is at least 1.52 mm (0.060 inch), and/or the first region (208b) comprises the taper (213) and the taper comprises an angle (β) in a range of 3 degrees to 70 degrees relative to the longitudinal axis.

8. The fastening collar (202) of claim 1 or claim 7, wherein the first distance (d₁) is at least 5% of the total length (dₜ) of the fastening collar.

9. A multi-piece fastener (300) comprising:
the fastening collar (202) of any one of claims 1-8; and
a pin (320) configured to be at least partially received in the cavity (210) of the fastening collar.

10. The multi-piece fastener (300) of claim 9, wherein the pin (320) comprises a shank (322) comprising a shank diameter in a range of 1.52 mm to 102 mm (0.06 inch to 4 inches).

11. The multi-piece fastener (300) of any one of claims 9 or 10, wherein the pin (320) comprises a shank (322) comprising at least one of an annular shoulder, a groove, a threaded region, and substantially smooth region.

12. The multi-piece fastener (300) of any one of claims 9-11, wherein the multi-piece fastener is configured to be installed in a bore (446) in a structure configured as at least one of an aerospace part or component, an automotive part or component, a transportation part or component, and a building and construction part or component.

13. A method for fastening, the method comprising:
providing a multi-piece fastener (300) comprising:
(a) the fastening collar (202) of claim 2; and
(b) a pin (320) configured to be at least partially received by the collar cavity (210), the pin comprising,
a first pin end (328),
a second pin end (330), and
a shank (322) extending intermediate the first pin end and the second pin end,
inserting the first pin end of the pin into a bore (446) of a structure; and
forcibly contacting the elongate portion of the fastening collar with a contact surface of an installation tool (440), thereby forcibly contacting the structure with the second collar end of the fastening collar and deforming the elongate portion onto the shank of the pin, wherein a force required to deform the elongate portion onto the shank of the pin during forcibly contacting is smaller than a force required to forcibly contact and deform onto the pin a comparative elongate portion that does not comprise a second collar end extending away from a longitudinal axis of the elongate portion at the first angle.

## Patentansprüche

1. Befestigungskragen (202), umfassend:
ein erstes Kragenende (204);
ein zweites Kragenende (206); und
einen länglichen Abschnitt (208) zwischen dem ersten Kragenende und dem zweiten Kragenende, der eine Längsachse (A*ₗ*) des Befestigungskragens definiert, wobei der längliche Abschnitt Folgendes umfasst:
einen ersten Bereich (208a) angrenzend an das erste Kragenende, der sich um einen ersten Abstand (d₁) entlang der Längsachse erstreckt, wobei der erste Bereich einen Bereich umfasst, der einen konkaven Radius (r₂) definiert, optional wobei der erste Bereich ferner eine Verjüngung (213) umfasst,
einen zweiten Bereich (208b) angrenzend an das zweite Kragenende, der sich um einen zweiten Abstand (d₂) entlang der Längsachse erstreckt und einen Flansch (214) umfasst, und
eine innere Kragenfläche (216), die einen Kragenhohlraum (210) definiert und sich von dem ersten Kragenende zu dem zweiten Kragenende durch den länglichen Abschnitt erstreckt.

2. Befestigungskragen (202) nach Anspruch 1, wobei sich das zweite Kragenende (206) von der Längsachse (A*ₗ*) des länglichen Abschnitts (208) unter einem ersten Winkel (δ) weg erstreckt, der von einem Winkel senkrecht zu der Längsachse des länglichen Abschnitts versetzt ist.

3. Befestigungskragen (202) nach Anspruch 2, wobei der erste Winkel (δ) mindestens um 1 Grad von dem Winkel senkrecht zu der Längsachse (A*ₗ*) des länglichen Abschnitts (208) versetzt ist, wobei der erste Winkel vorzugsweise ist:
um mindestens 5 Grad versetzt von dem Winkel senkrecht zu der Längsachse des länglichen Abschnitts; oder
in einem Bereich von 1 Grad bis 30 Grad versetzt von dem Winkel senkrecht zu der Längsachse des länglichen Abschnitts.

4. Befestigungskragen (202) nach Anspruch 2 oder Anspruch 3, wobei der konkave Radius (r₂) mindestens 1,52 mm (0,060 Zoll) beträgt und/oder der erste Bereich (208a) die Verjüngung (213) umfasst und die Verjüngung einen zweiten Winkel (β) in einem Bereich von 3 Grad bis 70 Grad relativ zu der Längsachse (A*ₗ*) umfasst.

5. Befestigungskragen (202) nach Anspruch 2, wobei der erste Abstand (d₁) mindestens 5 % der Gesamtlänge (dt) des Befestigungskragens beträgt und der zweite Abstand (d₂) mindestens 2 % der Gesamtlänge des Befestigungskragens beträgt.

6. Befestigungskragen (202) nach einem der Ansprüche 2-5, wobei der Befestigungskragen mindestens eines aus einem Metall, einer Metalllegierung und einem Verbundwerkstoff umfasst.

7. Befestigungskragen (202) nach Anspruch 1, wobei der konkave Radius (r₂) mindestens 1,52 mm (0,060 Zoll) beträgt und/oder der erste Bereich (208b) die Verjüngung (213) umfasst und die Verjüngung einen Winkel (β) in einem Bereich von 3 Grad bis 70 Grad relativ zu der Längsachse (Al) umfasst.

8. Befestigungskragen (202) nach Anspruch 1 oder Anspruch 7, wobei der erste Abstand (d₁) mindestens 5 % der Gesamtlänge (dt) des Befestigungskragens beträgt.

9. Mehrteiliges Befestigungselement (300), umfassend:
den Befestigungskragen (202) nach einem der Ansprüche 1-8; und
einen Stift (320), der so eingerichtet ist, dass er zumindest teilweise in dem Hohlraum (210) des Befestigungskragens aufgenommen wird.

10. Mehrteiliges Befestigungselement (300) nach Anspruch 9, wobei der Stift (320) einen Schaft (322) umfasst, der einen Schaftdurchmesser in einem Bereich von 1,52 mm bis 102 mm (0,06 Zoll bis 4 Zoll) umfasst.

11. Mehrteiliges Befestigungselement (300) nach einem der Ansprüche 9 oder 10, wobei der Stift (320) einen Schaft (322) umfasst, der mindestens eines aus einer ringförmigen Schulter, einer Nut, einem Gewindebereich und einem im Wesentlichen glatten Bereich umfasst.

12. Mehrteiliges Befestigungselement (300) nach einem der Ansprüche 9-11, wobei das mehrteilige Befestigungselement so eingerichtet ist, dass es in einer Bohrung (446) in einer Struktur installiert wird, die als zumindest eines aus einem Luft- und Raumfahrtteil oder -bauteil, einem Kraftfahrzeugteil oder -bauteil, einem Transportteil oder -bauteil oder einem Bauvorrichtungsteil oder -bauteil eingerichtet ist.

13. Befestigungsverfahren, wobei das Verfahren umfasst:
Bereitstellen eines mehrteiligen Befestigungselements (300), umfassend:
(a) den Befestigungskragen (202) nach Anspruch 2; und
(b) einen Stift (320), der so eingerichtet ist, dass er zumindest teilweise von dem Kragenhohlraum (210) aufgenommen wird, wobei der Stift Folgendes umfasst:
ein erstes Stiftende (328),
ein zweites Stiftende (330), und
einen Schaft (322), der sich zwischen dem ersten Stiftende und
dem zweiten Stiftende erstreckt,
Einführen des ersten Stiftendes des Stifts in eine Bohrung (446) einer Struktur; und
erzwungenes Inkontaktbringen des länglichen Abschnitts des Befestigungskragens mit einer Kontaktfläche eines Installationswerkzeugs (440), wodurch die Struktur zwangsweise mit dem zweiten Kragenende des Befestigungskragens in Kontakt gebracht wird und der längliche Abschnitt auf den Schaft des Stifts verformt wird, wobei eine Kraft, die erforderlich ist, um den länglichen Abschnitt während des erzwungenen Inkontaktbringens auf den Schaft des Stifts zu verformen, kleiner ist als eine Kraft, die erforderlich ist, um einen vergleichbaren länglichen Abschnitt, der kein zweites Kragenende umfasst, das sich von einer Längsachse des länglichen Abschnitts unter dem ersten Winkel weg erstreckt, zwangsweise in Kontakt zu bringen und auf den Stift zu verformen.

## Revendications

1. Un collier de fixation (202) comprenant :
une première extrémité de collier (204) ;
une seconde extrémité de collier (206) ; et
une partie allongée (208) entre la première extrémité de collier et la deuxième extrémité de collier et définissant un axe longitudinal (A*ₗ*) du collier de fixation, dans lequel la partie allongée comprend :
une première région (208a) adjacente à la première extrémité de collier, s'étendant sur une première distance (d₁₎ le long de l'axe longitudinal, dans laquelle la première région comprend une région définissant un rayon concave (r₂₎, éventuellement dans lequel la première région comprend en outre un cône (213),
une deuxième région (208b) adjacente à la deuxième extrémité de collier, s'étendant sur une deuxième distance (d₂) le long de l'axe longitudinal, et comprenant une bride (214), et
une surface de collier intérieure (216) définissant une cavité de collier (210) s'étendant à travers la partie allongée depuis la première extrémité de collier jusqu'à la deuxième extrémité de collier.

2. Collier de fixation (202) selon la revendication 1, dans lequel la seconde extrémité de collier (206) s'étend en s'éloignant de l'axe longitudinal (A*ₗ*) de la partie allongée (208) selon un premier angle (δ) décalé d'un angle perpendiculaire à l'axe longitudinal de la partie allongée.

3. Manchon de fixation (202) selon la revendication 2, dans lequel le premier angle (δ) est décalé d'au moins 1 degré par rapport à l'angle perpendiculaire à l'axe longitudinal (A*ₗ*) de la partie allongée (208), de préférence dans lequel le premier angle est :
au moins 5 degrés décalés par rapport à l'angle perpendiculaire à l'axe longitudinal de la partie allongée ; ou
dans une plage de 1 degré à 30 degrés décalée de l'angle perpendiculaire à l'axe longitudinal de la partie allongée.

4. Collier de fixation (202) selon la revendication 2 ou la revendication 3, dans lequel le rayon concave (r₂) est d'au moins 1,52 mm (0,060 pouces), et/ou la première région (208a) comprend la conicité (213) et la conicité comprend un second angle (β) dans une plage de 3 degrés à 70 degrés par rapport à l'axe longitudinal (A*ₗ*).

5. Collier de fixation (202) selon la revendication 2, dans lequel la première distance (d₁₎ représente au moins 5 % de la longueur totale (dt) du collier de fixation et la seconde distance (d₂) représente au moins 2 % de la longueur totale du collier de fixation.

6. Collier de fixation (202) selon l'une quelconque des revendications 2 à 5, dans lequel le collier de fixation comprend au moins un parmi un métal, un alliage métallique, et un matériau composite.

7. Collier de fixation (202) selon la revendication 1, dans lequel le rayon concave (r₂) est d'au moins 1,52 mm (0,060 pouce), et/ou la première région (208b) comprend la conicité (213) et la conicité comprend un angle (β) dans une plage de 3 degrés à 70 degrés par rapport à l'axe longitudinal.

8. Collier de fixation (202) selon la revendication 1 ou la revendication 7, dans lequel la première distance (d₁₎ représente au moins 5 % de la longueur totale (dt) du collier de fixation.

9. Élément de fixation en plusieurs pièces (300) comprenant :
collier de fixation (202) selon l'une quelconque des revendications 1 à 8 ; et
une broche (320) configurée pour être au moins partiellement reçue dans la cavité (210) du collier de fixation.

10. Elément de fixation en plusieurs pièces (300) selon la revendication 9, dans lequel la broche (320) comprend une tige (322) comprenant un diamètre de tige dans une plage de 1,52 mm à 102 mm (0,06 pouce à 4 pouces).

11. Elément de fixation en plusieurs pièces (300) selon l'une quelconque des revendications 9 ou 10, dans lequel la broche (320) comprend une tige (322) comprenant au moins un élément parmi un épaulement annulaire, une rainure, une région filetée et une région sensiblement lisse.

12. Élément de fixation en plusieurs pièces (300) selon l'une quelconque des revendications 9 à 11, dans lequel l'élément de fixation en plusieurs pièces est configuré pour être installé dans un alésage (446) dans une structure configurée comme l'au moins un parmi un élément ou composant aérospatial, un élément ou composant automobile, un élément ou composant de transport, et un élément ou composant pour le bâtiment et la construction.

13. Procédé de fixation, le procédé comprenant :
la fourniture d'un élément de fixation en plusieurs pièces (300) comprenant :
(a) le collier de fixation (202) de la revendication 2 ; et
(b) une broche (320) configurée pour être au moins partiellement reçue par la cavité du collier (210), la broche comprenant,
une première extrémité de broche (328),
une deuxième extrémité de broche (330), et
une tige (322) s'étendant entre la première extrémité de broche et la deuxième extrémité de broche,
l'insertion de la première extrémité de broche de la broche dans un alésage (446) d'une structure ; et
le contact forcé de la partie allongée du collier de fixation avec une surface de contact d'un outil d'installation (440), en mettant ainsi en contact de force la structure avec la seconde extrémité de collier du collier de fixation et en déformant la partie allongée sur la tige de la broche, dans lequel une force requise pour déformer la partie allongée sur la tige de la broche pendant le contact forcé est inférieure à une force requise pour venir en contact forcé et déformer sur la broche une partie allongée comparative qui ne comprend pas une seconde extrémité de collier s'étendant à l'écart d'un axe longitudinal de la partie allongée au niveau du premier angle.
